# EUROPÄISCHE PATENTSCHRIFT

(11) **EP 2 543 649 B1**
(45) Veröffentlichungstag und Bekanntmachung des Hinweises auf die Patenterteilung: **08.08.2018**
(21) Anmeldenummer: 12004619.8
(22) Anmeldetag: 20.06.2012
(51) Int. Cl.: C04B 28/02, C04B 111/10

(54) **Ultrahochfester Beton**
Extremely resistant concrete
Béton ultra-haute résistance

(30) Priorität: 06.07.2011 DE 102011107285
(43) Veröffentlichungstag der Anmeldung: 09.01.2013
(73) Patentinhaber: Teichmann, Thomas, 34233 Fuldatal (DE); Theilmeier-Adelhoff, Thomas, 33378 Rheda-Wiedenbrück (DE)
(72) Erfinder: Teichmann, Thomas, 34233 Fuldatal (DE); Theilmeier-Adelhoff, Thomas, 33378 Rheda-Wiedenbrück (DE)
(74) Vertreter: Ellberg, Nils

(56) Entgegenhaltungen:
- EP-A1- 1 607 378
- WO-A1-95/01317
- WO-A1-2010/109095
- WO-A1-2011/067431
- CN-A- 1 403 402
- CN-A- 101 139 192
- CN-A- 101 186 479
- CN-A- 101 486 554
- CN-A- 101 580 369
- FR-A1- 2 919 638
- US-A- 5 466 289
- US-A1- 2010 237 158
- US-B1- 6 478 867
- YAZICI ET AL: "The effect of curing conditions on compressive strength of ultra high strength concrete with high volume mineral admixtures", BUILDING AND ENVIRONMENT, PERGAMON PRESS, OXFORD, GB, vol. 42, no. 5, 22 December 2006 (2006-12-22), pages 2083-2089, XP005811329, ISSN: 0360-1323, DOI: 10.1016/J.BUILDENV.2006.03.013

## Beschreibung

Die Erfindung betrifft einen ultrahochfesten Beton. Die Erfindung betrifft des Weiteren einen monolithischen Formstein gemäß Anspruch 4. Schließlich betrifft die Erfindung einen Formstein, der gemäß dem Oberbegriff des Anspruchs 5 aus mindestens zwei Komponenten zusammengesetzt ist.
Ultrahochfester Beton oder auch UHSC (ultra high strength concrete) ist eine Betonsorte, deren Druckfestigkeit über 120 N/mm² festgelegt wird. In Deutschland geht man von einem ultrahochfesten Beton aus, wenn die Druckfestigkeit über 150 N/mm² beträgt. Wird der konventionelle Beton als Drei-Phasen-Werkstoff bestehend aus Zement, Wasser und Gesteinskörnung bezeichnet, handelt es sich bei dem ultrahochfesten Beton um einen Fünf-Phasen-Werkstoff. Dieser Fünf-Phasen-Werkstoff enthält neben den bekannten Komponenten für konventionellen Beton weitere Zusatzmittel und Zusatzstoffe. Schon seit Längerem ist bekannt, dass der konventionelle Beton an seine Einsatzgrenzen stößt. Daher wird es angestrebt, durch Beimischung dieser Zusatzmittel und Zusatzstoffe einen Beton zu kreieren, der effektivere Gestaltungmöglichkeiten zulässt. Der aus diesen Bestrebungen hervorgegangene Fünf-Phasen-Werkstoff wird als ultrahochfester Beton bezeichnet.
Durch das Beimischen von Zusatzmitteln und Zusatzstoffen soll eine sehr hohe Packungsdichte der Feinstoffe und ein geringes Wasserzementverhältnis für diesen ultrahochfesten Beton erreicht werden.

Über das Mischungsverhältnis der Inhaltstoffe wie Wasser, Zement, Füllstoffe und Gesteinskörnung, sowie die Korngrößen der Zusatzstoffe steht eine ganz Reihe von Parametern zur Verfügung, über die die Eigenschaften des ultrahochfesten Betons variiert werden können. Neben den Mischungsverhältnissen und den Korngrößen spielen jedoch auch die auftretenden Wechselwirkungen der Bestandteile eine große Rolle. Durch entsprechende Abstimmung dieser Parameter können Druckfestigkeiten des ultrahochfesten Betons von über 250 N/mm² erreicht werden. Verglichen mit konventionellem Beton weisen Tragstrukturen aus ultrahochfestem Beton eine um 30-50 % gesenkte Eigenlast auf. Bedingt durch die extrem hohe Festigkeit des ultrahochfesten Betons ist es möglich wesentlich leichtere, filigrane und dennoch hochtragfähige und sehr dauerhafte Bauteile herzustellen.

Gegenüber dem konventionellen Beton besteht eine technologische Besonderheit des ultrahochfesten Betons darin, dass er eine extrem hohe Gefügedichte aufweist, die unter bestimmten Herstellungsbedingungen so gut wie keine Poren und Mikrorisse aufweist. Dadurch konnte der Kapillarporenanteil des ultrahochfesten Betons gegenüber dem konventionellen Beton drastisch reduziert werden. Dieser geringe Kapillarporenanteil des ultrahochfesten Betons macht ihn praktisch dicht gegen Flüssigkeit, Gase und anderen Chemikalien. Bedingt durch diese Eigenschaft wird die Dauerhaftigkeit des ultrahochfesten Betons besonders im Einsatz in betonaggressiven Milieus, wo zum Beispiel korrosive oder ätzende Mittel zum Einsatz kommen, verbessert. Durch die Reduzierung des Kapillarporenanteils konnte außerdem erreicht werden, dass die den Beton angreifenden Stoffe nicht in denselben eindringen können, was zu einer Verringerung von Bauschäden führt.

Neben der Verbesserung der Druckfestigkeit und des Kapillarporenanteils konnten auch Betonkennwerte wie das Elastizitätsmodul, Zugfestigkeit und Dauerhaftigkeit des ultrahochfesten Betons gesteigert werden. Das führt vor allem zu innovativen Konstruktionen, die neue Möglichkeiten des Bauens eröffnen.

FR 2 919 638 A1 offenbart ein räumliches Tragelement aus UHPC, bei dem es sich um eine Art Träger aus zwei zusammengesetzten Profilen handelt, die entlang ihrer Längsachse miteinander verbunden sind.

WO 95/01317 A1 offenbart eine spezielle Betonzusammensetzung mit hoher Festigkeit von 400 MPa. Eine Besonderheit besteht darin, dass der Beton nach dem Abbinden mit einer Temperatur von über 250 °C gebrannt wird.
EP 1 607 378 A1 betrifft einen Zusatzstoff für Zement, sowie einen entsprechenden Zement. Die Besonderheit besteht in der Verwendung besonderer Zusatzstoffe.
US 6,478,867 B1 betrifft einen Beton mit einer besonderen Zusammensetzung.
Der Artikel von Yazici et al: "The effect of curing conditions on compressive strength of ultra high strength concrete with high volume mineral admixtures", veröffentlicht in Building and Environment, Pergamon Press, Oxford, GB, Bd. 42, Nr. 5, 22. Dezember 2006, Seiten 2083-2089, betrifft einen ultrahochfesten Beton mit Basalt als Zuschlagstoff. Der Erfindung liegt die Aufgabe zugrunde ultrahochfesten Beton weiterzuentwickeln, insbesondere im Hinblick auf zusätzliche Anwendungsmöglichkeiten bzw. Einsatzzwecke. Ein ultrahochfester Beton zur Lösung dieser Aufgabe weist die Merkmale des Anspruchs 1 auf. Es ist demnach vorgesehen, dass die Inhaltsstoffe derart gewählt werden, dass der ultrahochfeste Beton eine erdfeuchte Konsistenz aufweist. Durch diese Wahl der Inhaltsstoffe erhält der ultrahochfeste Beton eine krümelige Struktur mit sehr hoher inneren Kohäsion, ist aber trotzdem gut vermischbar bzw. die Ausgangsstoffe sind ausreichend gut dispergiert und liegen gut verteilt und packungswirksam im Gefüge vor. Erfindungsgemäß ist vorgesehen, dass der Zementanteil des ultrahochfesten Betons 600 kg bis 800 kg pro m³ beträgt, und dass einer der Füllstoffe ein super-reaktiver Füllstoff ist, mit einem Anteil am ultrahochfesten Beton von 80 kg bis 120 kg pro m³. Die super-reaktiven Füllstoffe können sein: Getemperte Alumoschichtsilikate, hochfeine Silikstäube, hochfeine aufgemahlene Zemente, oder Flugasche, Tonrestmehle oder Kalksteinmehle als Mikrokristallkeime. Erfindungsgemäß ist vorgesehen, dass einer der Füllstoffe latent-hydraulisch ist mit einem Anteil am ultrahochfesten Beton von 150 kg bis 450 kg pro m³. Als latent-hydraulische Feinstoffe sind bevorzugt Hüttensande, Flugasche und latent hydraulisch reagierende Restasche aus Verbrennungsvorgängen vorgesehen. Erfindungsgemäß ist vorgesehen, dass der Anteil eines inerten Füllstoffes am ultrahochfesten Beton 80 kg bis 300 kg pro m³ beträgt. Die inerten Füllstoffe sind Gesteinsmehl, wie Kalksteinmehl, Quarzmehl, Basaltmehl und andere Mehle.

Erfindungsgemäß ist vorgesehen, dass der Wasseranteil des ultrahochfesten Betons 120 Liter bis 160 Liter pro m³ beträgt. Erfindungsgemäß ist vorgesehen, dass der Fließmittelanteil des ultrahochfesten Betons 4 Liter bis 6 Liter pro m³ beträgt. Erfindungsgemäß ist vorgesehen, dass die Gesteinskörnung im Bereich 0,125 mm bis 2 mm liegt und einen Anteil von 650 kg bis 1250 kg pro m³ des ultrahochfesten Betons aufweist. Erfindunsgemäß ist vorgesehen, dass die Gesteinskörnung im Bereich > 2 mm einen Anteil von 400 bis 800 kg pro m³ des ultrahochfesten Betons aufweist.

Nach einer vorteilhaften weiteren Ausgestaltung der Erfindung ist es vorgesehen, dass die Packungsdichte 0,72 bis 0,85 beträgt.

Eine vorteilhafte Weiterbildung des ultrahochfesten Betons sieht es vor, dass die Wasserfilmdichte 600 nm bis 100 nm um jedes Korn beträgt.

Die Messung der Wasserfilmdichte kann in Anlehnung an das von Puntke bekannten verfahren erfolgen. Hierzu wird auch auf die Dissertation "Influence of the granulometrie and the water content on the strength and density of cement stone" von Thomas Teichmann verwiesen (Hrsg.: Schmidt, M., Fehling, E.; Dissertation, 192 Seiten, Structural Materials and Engineering Series, No. 12, 2007; ISBN 978-3-89958-441-7).

Ein monolithischer Formstein zur Lösung der Eingangs genannten Aufgabe weist die Merkmale des Anspruchs 4 auf. Demnach ist es vorgesehen, dass der monolithische Formstein aus ultrahochfestem Beton gemäß einem oder mehreren der Ansprüche 1 bis 3 gebildet ist.

Ein Formstein zur Lösung der Eingangs genannten Aufgabe weist die Merkmale des Anspruchs 5 auf. Der Formstein setzt sich demnach zusammen aus mindestens zwei Komponenten, nämlich einem Kern und einem Vorsatz, vorzugsweise einer Vorsatzschicht, wobei der Vorsatz oder der Kern aus ultrahochfestem Beton gemäß einem oder mehreren der Ansprüche 1 bis 3 gebildet ist.

Besonders die Oberflächenbeschaffenheit von Bodenplatten (Betonsteinplatten und Betonpflastersteinen) kann durch die Verwendung des erfindungsgemäßen ultrahochfesten Betons verbessert werden. Außerdem stehen durch die oben dargestellten Besonderheiten des ultrahochfesten Betons neue gestalterische Möglichkeiten für die Schaffung von Oberflächen zur Verfügung. So können Platten insbesondere Bodenplatten komplett aus ultrahochfesten Beton bestehen, oder mit konventionellem Beton so kombiniert werden, dass nur ein Teil, vorzugsweise die Sichtseite der Platte, aus ultrahochfesten Beton besteht. Ein solcher Vorsatz aus ultrahochfestem Beton hat diverse praktische und ästhetische Vorzüge gegenüber Vorsätzen aus konventionellem Beton. So lassen sich die Vorteile des konventionellen und des ultrahochfesten Betons wirtschaftlich und anwendungsbezogen kombinieren.

Das Herstellungsverfahren eines monolithischen oder eines aus mehreren Komponenten zusammengesetzten Formsteins aus ultrahochfestem Beton sieht es vor, dass zur Mischung der einzelnen Bestandteile und Zuschläge diese über wiegefähige Förderstrecken oder über separate Wiegebehälter mit einer der Rezeptur entsprechenden Dosierung dem Mischsystem zugeführt werden.

Aufgrund der geringen Toleranzen der Anteile der zu mischenden Bestandteile des ultrahochfesten Betons bestehen im Vergleich zur Herstellung von konventionellem Beton hohe Anforderungen an Dosier- und Wiegetechniken für die Herstellung des ultrahochfesten Betons. Aufgrund der extrem feinen Struktur einzelner Bestandteile des ultrahochfesten Betons sind zur Herstellung desselben Hochleistungsmischer zwingend erforderlich. Ein solcher Hochleistungsmischer ist mit speziellen Mischwerkzeugen ausgestattet, sodass er in der Lage ist die feinstoffliche Systematik des ultrahochfesten Betons aufzuschließen und die Feinstoffe zu dispergieren. Nach dem Dosieren und dem Mischen wird der ultrahochfeste Beton in eine leere Betonsteinform gegossen. Dort erfolgt eine Verdichtung des eingefüllten Betons.

Zur Herstellung eines aus mehreren Komponenten zusammengesetzten Betons werden zunächst die Betone für beide Komponenten separat hergestellt, zur Steinformmaschine verbracht und dort in separaten Vorratsbehältern bis zur Verarbeitung gelagert. Anschließend erfolgt die Dosierung einer ersten Komponente, insbesondere eines Kernbetons in eine leere Betonsteinform der Steinformmaschine. Bei dem Kernbeton kann es sich beispielsweise um Normalbeton oder Leichtbeton handeln, in jedem Fall aber um einen herkömmlichen Beton. Alternativ kann es sich bei dem Kernbeton aber auch um ultrahochfesten Beton handeln. An die Dosierung der ersten Komponente schließt sich eine Vorverdichtung des Kernbetons mittels Rüttlung und/oder Stempeldruck an. Im Weiteren wird die zweite Komponente, insbesondere der Vorsatzbeton, mittels Füllwagen über den vorverdichteten Kernbeton dosiert. Die Endverdichtung und Zusammenführung der Vorsatzschicht und des Kerns erfolgt mittels Rüttlung und/oder Stempeldruck bis zum Endzustand. Danach werden die frischen Steine über eine Transporteinrichtung in eine Reifekammer transportiert. Bei diesem Verfahren übernimmt der Vorsatzbeton unter anderem die Funktion des Füllmengenausgleichs, da die Steinformen systembedingt niemals ganz gleichmäßig gefüllt werden können und somit Höhenunterschiede entstehen können. Durch sukzessives Nachfüllen des Vorsatzbetons werden diese Höhenunterschiede ausgeglichen.

## Patentansprüche

1. Ultrahochfester Beton (UHPC, ultra high performance concrete) zusammengesetzt wenigstens aus den Inhaltsstoffen Wasser, Zement, Füllstoffen und Gesteinskörnung, wobei die Inhaltsstoffe derart gewählt sind, dass der ultrahochfeste Beton eine erdfeuchte Konsistent aufweist, und wobei der Zementanteil des ultrahochfesten Betons 600 kg bis 800 kg pro m³ beträgt, und wobei einer der Füllstoffe ein super-reaktiver Füllstoff ist mit einem Anteil am ultrahochfesten Beton von 80 kg bis 120 kg pro m³, und wobei einer der Füllstoffe latent-hydraulisch ist mit einem Anteil am ultrahochfesten Beton 150 kg bis 450 kg pro m³, und wobei der Anteil eines inerten Füllstoffes am ultrahochfesten Beton 80 kg bis 300 kg pro m³ beträgt und wobei der Wasseranteil des ultrahochfesten Betons 120 Liter bis 160 Liter pro m³ beträgt, und wobei der Fließmittelanteil des ultrahochfesten Betons 4 Liter bis 6 Liter pro m³ beträgt, und wobei die Gesteinskörnung im Bereich 0,125 mm bis 2 mm einen Anteil von 650 kg bis 1250 kg pro m³ des ultrahochfesten Betons aufweist, und wobei die Gesteinskörnung im Bereich größer als 2 mm einen Anteil von 400 kg bis 800 kg pro m³ des ultrahochfesten Betons aufweist.

2. Ultrahochfester Beton nach Anspruch 1, **dadurch gekennzeichnet, dass** die Packungsdichte 0,72 bis 0,85 beträgt.

3. Ultrahochfester Beton nach Anspruch 1 oder 2, **dadurch gekennzeichnet, dass** die Wasserfilmdichte 60 nm bis 100 nm um jedes Korn beträgt.

4. Monolithischer Formstein, **dadurch gekennzeichnet, dass** der Formstein aus ultrahochfesten Beton gemäß einem oder mehreren der Ansprüche 1 bis 3 gebildet ist.

5. Formstein, der sich aus mindestens zwei Komponenten zusammensetzt, nämlich einem Kern und einem Vorsatz, vorzugsweise einer Vorsatzschicht, **dadurch gekennzeichnet, dass** der Vorsatz oder der Kern aus ultrahochfesten Beton gemäß einem oder mehreren der Ansprüche 1 bis 3 gebildet ist.

## Claims

1. Ultrahigh-performance concrete (UHPC) composed at least of the ingredients of water, cement, fillers and aggregate, wherein the ingredients are chosen such that the ultrahigh-performance concrete has an earth-moist consistency, and wherein the cement content of the ultrahigh-performance concrete is 600 kg to 800 kg per m³, and wherein one of the fillers is a super-reactive filler with a content in the ultrahigh-performance concrete of 80 kg to 120 kg per m³, and wherein one of the fillers is latently hydraulic with a content in the ultrahigh-performance concrete of 150 kg to 450 kg per m³, and wherein the content of an inert filler in the ultrahigh-performance concrete is 80 kg to 300 kg per m³ and wherein the water content of the ultrahigh-performance concrete is 120 litres to 160 litres per m³, and wherein the plasticizer content of the ultrahigh-performance concrete is 4 litres to 6 litres per m³, and wherein the aggregate in the range of 0.125 mm to 2 mm has a content of 650 kg to 1250 kg per m³ of the ultrahigh-performance concrete, and wherein the aggregate in the range of greater than 2 mm has a content of 400 kg to 800 kg per m³ of the ultrahigh-performance concrete.

2. Ultrahigh-performance concrete according to Claim 1, **characterized in that** the packing density is 0.72 to 0.85.

3. Ultrahigh-performance concrete according to Claim 1 or 2, **characterized in that** the water film density is 60 nm to 100 nm around each grain.

4. Monolithic moulded brick, **characterized in that** the moulded brick has been formed from ultrahigh-performance concrete according to one or more of Claims 1 to 3.

5. Moulded brick composed of at least two components, namely a core and a facing, preferably a facing layer, **characterized in that** the facing or the core has been formed from ultrahigh-performance concrete according to one or more of Claims 1 to 3.

## Revendications

1. Béton à ultra-hautes performances (UHPC, ultra high performance concrete), composé au moins des composants eau, ciment, charges et granulat, dans lequel les composants sont choisis de manière que le béton à ultra-hautes performances présente une consistance de terre humide, et dans lequel la teneur en ciment du béton à ultra-hautes performances vaut de 600 kg à 800 kg par m³, et dans lequel l'une des charges est une charge super-réactive en une proportion dans le béton à ultra-hautes performances de 80 kg à 120 kg par m³, et dans lequel l'une des charges est hydraulique-latente en une proportion dans le béton à ultra-hautes performances de 150 kg à 450 kg par m³, et dans lequel la proportion d'une charge inerte dans le béton à ultra-hautes performances vaut de 80 kg à 300 kg par m³ et dans lequel la teneur en eau du béton à ultra-hautes performances vaut de 120 litres à 160 litres par m³, et dans lequel la teneur en fluidifiant du béton à ultra-hautes performances vaut de 4 litres à 6 litres par m³, et dans lequel le granulat à granulométrie dans la plage de 0,125 mm à 2 mm est présent en une proportion de 650 kg à 1 250 kg par m³ du béton à ultra-hautes performances et dans lequel le granulat à granulométrie supérieure à 2 mm est présent en une proportion de 400 kg à 800 kg par m³ du béton à ultra-hautes performances.

2. Béton à ultra-hautes performances selon la revendication 1, **caractérisé en ce que** la densité apparente vaut de 0,72 à 0,85.

3. Béton à ultra-hautes performances selon la revendication 1 ou 2, **caractérisé en ce que** l'épaisseur de la pellicule d'eau vaut de 60 nm à 100 nm autour de chaque grain.

4. Bloc moulé monolithique, **caractérisé en ce que** le bloc moulé est constitué de béton à ultra-hautes performances selon une ou plusieurs des revendications 1 à 3.

5. Bloc moule qui est composé d'au moins deux composants, à savoir d'un noyau et d'un parement, de préférence d'une couche de parement, **caractérisé en ce que** le parement ou le noyau est constitué de béton à ultra-hautes performances selon une ou plusieurs des revendications 1 à 3.
